# EUROPEAN PATENT APPLICATION

(11) **EP 1 542 057 A1**
(43) Date of publication of application: **15.06.2005**
(21) Application number: 03741286.3
(22) Date of filing: 09.07.2003
(51) Int. Cl.: G02B 26/08

(54) **OPTICAL SWITCH AND OPTICAL SWITCH UNIT**

(30) Priority: 05.08.2002 JP 2002227668
(71) Applicant: Omron Corporation, Kyoto-shi, Kyoto 600-8530 (JP)
(72) Inventor: NAKANISHI, Y., OMRON CORP., 801, Minamifudodo-cho, Kyoto-shi, Kyoto 600-8530 (JP); FUKUDA, Kazuki; OMRON CORP. 801, Minamifudodo-cho, Kyoto-shi, Kyoto 600-8530 (JP); TANAKA, Hirokazu OMRON CORP. 801, Minamifudodo-cho, Kyoto-shi, Kyoto 600-8530 (JP); ONISHI, Tetsuya; OMRON CORP. 801, Minamifudodo-cho, KKyoto-shi, Kyoto 600-8530 (JP); IMAI, Hideki; OMRON CORP., 801, Minamifudodo-cho, kyoto-shi, Kyoto 600-8530 (JP)
(74) Representative: Kilian, Helmut, Dr.
(86) International application number: PCT/JP2003/008688
(87) International publication number: WO 2004/013675

(57) **Abstract**

An optical switch has plural incident side optical fibers 4a; plural main emitting side optical fibers 7a respectively arranged so as to be opposed to the respective incident side optical fibers 4a; a single preliminary emitting side optical fiber 7b; a reflection means 5 moved so as to be positioned with respect to one of the incident side optical fibers 4a, and reflecting an optical signal from the incident side optical fiber 4a to the preliminary emitting side optical fiber 7b; and a driving means 21 for moving the reflection means 5 with respect to each incident side optical fiber 4a and reflecting the optical signal from this incident side optical fiber 4a by the reflection means 5 and able to set this optical signal to be incident to the preliminary emitting side optical fiber 7b.

## Description

### Technical Field

The present invention relates to an optical switch, more particularly, an optical redundant change-over switch in an optical communication system, and an optical switch unit also having a control circuit.

### Background Art

For example, the following structure is conventionally publicly known as an optical switch able to perform optical redundant switching.

Namely, JP-A-2000-321512 discloses an optical switch in which an optical fiber of the incident side and an optical fiber of the emitting side are arranged so as to set optical paths to be perpendicular to each other, and a mirror as a reflection member raised and lowered inside and outside the optical paths and inclined 45 degrees is arranged in a crossing portion of each optical path.

However, in the above optical switch, the mirror, an actuator for raising and lowering each mirror, etc. must be arranged in the crossing portion of each optical path so that the optical switch is expensive. Further, the core of the optical fiber has about 10 µm in diameter, and it is necessary to adjust the optical path formed through the mirror with high accuracy. However, there are many adjusting portions in the above optical switch and the adjustments are complicated.

### Disclosure of the Invention

### (Technical Problems that the Invention is to Solve)

A subject of the present invention is to provide an optical switch and an optical switch unit able to suitably perform the optical redundant switching even in a simple construction having a small number of parts.

### (Its solving method and effects more effective than the prior art)

In the present invention, the optical switch is constructed as a means for solving the above subject so as to comprise an incident side light transmitting member constructed by plural incident side optical fibers;
an emitting side light transmitting member constructed by plural emitting side optical fibers respectively arranged so as to be opposed to the respective incident side optical fibers;
at least one preliminary optical fiber functioning as one of the incident side optical fiber and the emitting side optical fiber;
reflection means moved so as to be positioned with respect to one of the optical fibers and able to transmit an optical signal between the preliminary optical fiber and the other optical fibers by reflecting the optical signal; and
driving means for moving the reflection means so as to be able to position the reflection means with respect to one of the optical fibers.

In accordance with this construction, the optical signal is transmitted and received in a normal communication state between the corresponding inside side optical fiber and emitting side optical fiber. The reflection means is moved by operating the driving means only when a problem is caused in one of the transmitting paths. The optical signal can be transmitted and received through the preliminary optical fiber. Accordingly, it is sufficient to arrange only one reflection means and only one driving means so that the construction can be simplified and the optical switch can be cheaply manufactured.

In the present invention, the optical switch may be also constructed as the means for solving the above subject so as to comprise plural incident side optical fibers;
plural main emitting side optical fibers respectively arranged so as to be opposed to the respective incident side optical fibers, and a single preliminary emitting side optical fiber;
reflection means for reflecting an optical signal from one of the incident side optical fibers to the preliminary emitting side optical fiber; and
driving means for moving the reflection means with respect to one of the respective incident side optical fibers.

In the present invention, the optical switch is also constructed as the means for solving the above subject so as to comprise plural main incident side optical fibers and a single preliminary incident side optical fiber;
plural emitting side optical fibers respectively arranged so as to be opposed to the respective main incident side optical fibers;
reflection means for reflecting an optical signal from the preliminary incident side optical fiber to one of the emitting side optical fibers; and
driving means for moving the reflection means with respect to one of the respective emitting side optical fibers.

In the present invention, the optical switch is further constructed as the means for solving the above subject so as to comprise plural main incident side optical fibers and a single preliminary incident side optical fiber;
plural main emitting side optical fibers respectively arranged so as to be opposed to said respective main incident side optical fibers, and a single preliminary emitting side optical fiber arranged so as to be opposed to said preliminary incident side optical fiber;
reflection means moved so as to be positioned with respect to one of the optical fibers, and able to transmit an optical signal between the preliminary optical fibers and the other optical fibers by reflecting the optical signal; and
driving means for moving the reflection means so as to be able to position the reflection means with respect to one of the optical fibers.

In the present invention, the optical switch is also constructed as the means for solving the above subject such that an incident side light transmitting member constructed by plural incident side optical fibers, an emitting side light transmitting member constructed by plural emitting side optical fibers, and at least one preliminary optical fiber functioning as one of the incident side optical fiber and the emitting side optical fiber are arranged in parallel and integrated;
an optical signal from each incident side optical fiber is reflected by fixture reflection means and is transmitted to each corresponding emitting side optical fiber; and
the optical signal can be transmitted between the preliminary optical fiber and the other optical fibers by reflecting the optical signal by movable reflection means movable through driving means so as to be positioned with respect to one of the optical fibers.

In the present invention, the optical switch is also constructed as the means for solving the above subject such that plural incident side optical fibers, plural main emitting side optical fibers and a single preliminary emitting side optical fiber are arranged in parallel and are integrated;
an optical signal from each incident side optical fiber is reflected by fixture reflection means and is transmitted to each corresponding main emitting side optical fiber; and
the optical signal is reflected by movable reflection means movable through driving means so as to be positioned with respect to one of the optical fibers, and can be transmitted between the incident side optical fiber and the preliminary emitting optical fiber.

In the present invention, the optical switch is further constructed as the means for solving the above subject such that plural main incident side optical fibers, a single preliminary incident side optical fiber and plural emitting side optical fibers are arranged in parallel and are integrated;
an optical signal from each main incident side optical fiber is reflected by fixture reflection means and is transmitted to each corresponding emitting side optical fiber; and
the optical signal is reflected by movable reflection means movable through driving means so as to be positioned with respect to one of the optical fibers, and can be transmitted between the preliminary incident side optical fiber and the emitting side optical fiber.

In the present invention, the optical switch is also constructed as the means for solving the above subject such that plural main incident side optical fibers, a single preliminary incident side optical fiber, plural main emitting side optical fibers and a single preliminary emitting side optical fiber are arranged in parallel and are integrated,
an optical signal from each main incident side optical fiber is reflected by fixture reflection means and is transmitted to each corresponding main emitting side optical fiber,
the optical signal is reflected by movable reflection means movable through driving means so as to be positioned with respect to one of the optical fibers, and can be transmitted between the preliminary incident side optical fiber and the main emitting side optical fiber, or between the preliminary emitting side optical fiber and the main incident side optical fiber.

It is preferable that said driving means can escape the reflection means until a position for interrupting no optical path between the incident side optical fiber and the emitting side optical fiber in moving the reflection means.

Said driving means is preferably constructed by a stepping motor or a voice coil motor.

It is also preferable that a lens array for integrating said optical fibers and having a collimator lens for setting light emitted or incident to each optical fiber to parallel light is arranged.

When said reflection means and said preliminary emitting side optical fiber can be integrally moved, it is preferable since the optical path length can be always set to a constant size irrespective of the moving position of the reflection means and an insertion loss can be restrained.

It is also preferable that said reflection means is constructed by a reflection face formed by press working in one end portion of a bar material manufactured by a metal, press working in one end portion of a bar material manufactured by glass, or injection molding processing since processing becomes easy.

It is also preferable that the optical switch of the above construction and control means for controlling the operation of said driving means are stored into a single casing since a compact construction can be set.

### Brief Description of the Drawings

Fig. 1 is an exploded perspective view showing constructional parts except for an optical switch of an optical switch unit in accordance with a first embodiment mode.

Fig. 2 is an exploded perspective view of the optical switch in accordance with the first embodiment mode.

Fig. 3 is a plan view of the optical switch unit in accordance with the first embodiment mode.

Fig. 4A is a cross-sectional view taken along lines A, B, C and D of Fig. 3, and Fig. 4B is its partial enlarged view.

Fig. 5 is a cross-sectional view of each light transmitting member shown in Fig. 3.

Fig. 6 is a partial enlarged view of Fig. 3.

Fig. 7 is an enlarged perspective view showing a movable type reflection member of Fig. 6.

Fig. 8A is a plan view of an optical switch unit in accordance with a second embodiment mode, and Fig. 8B is its cross-sectional view.

Fig. 9 is a partial enlarged plan view of an optical switch unit in accordance with a third embodiment mode.

Fig. 10 is an exploded perspective view of an optical switch in accordance with a fourth embodiment mode.

Figs. 11A, 11B and 11C are respectively a plan view, a front view and a side view of the optical switch in accordance with the fourth embodiment mode.

Figs. 12A and 12B are respectively a partial enlarged plan view and a partial enlarged front view showing states before the operation of the optical switch in accordance with the fourth embodiment mode, and Figs. 12C and 12D are respectively a partial enlarged plan view and a partial enlarged front view showing states after the operation of the optical switch in accordance with the fourth embodiment mode.

Figs. 13A, 13B and 13C are respectively a perspective view, a side view and a cross-sectional view of a base in accordance with the fourth embodiment mode.

Figs. 14A, 14B, 14C and 14D are respectively a plan view, a front view, a C-C line sectional view and a D-D line sectional view of the base in accordance with the fourth embodiment mode.

Figs. 15A and 15B are respectively a plan view and a front view of a state in which a mirror block and a prism in accordance with the fourth embodiment mode are combined.

Figs. 16A and 16B are respectively a plan view and a side view of an adjusting plate in accordance with the fourth embodiment mode.

Fig. 17 is an exploded perspective view of an optical path switching unit in accordance with the fourth embodiment mode.

Figs. 18A, 18B and 18C are respectively a plan view, a front view and a side view of the optical path switching unit in the fourth embodiment mode.

Figs. 19A, 19B and 19C are respectively a plan view, a front view and a central sectional view of a movable block in the fourth embodiment mode.

Figs. 20A and 20B are respectively a cross-sectional view and a bottom view of a bar-shaped reflection means attached to a holder in accordance with the fourth embodiment mode.

Fig. 21 is a schematic view for explaining an operating method of the movable block in accordance with the fourth embodiment mode.

Figs. 22A, 22B, 22C and 22D are respectively a plan view, a front view, a cross-sectional view and a right-hand side view of a case in accordance with the fourth embodiment mode.

Figs. 23A, 23B and 23C are respectively a plan view, a front view and a side view of an optical switch in accordance with a fifth embodiment mode.

Figs. 24A and 24B are respectively a partial enlarged plan view and a partial enlarged front view showing states before the operation of the optical switch in accordance with the fifth embodiment mode, and Figs. 24C and 24D are respectively a partial enlarged plan view and a partial enlarged front view showing states after the operation of the optical switch in accordance with the fifth embodiment mode.

Figs. 25A and 25B are respectively a partial enlarged plan view and a partial enlarged front view showing states before the operation of an optical switch in accordance with a sixth embodiment mode, and Figs. 25C and 25D are respectively a partial enlarged plan view and a partial enlarged front view showing states after the operation of the optical switch in accordance with the sixth embodiment mode.

### Best Mode for Carrying Out the Invention

An embodiment mode in accordance with the present invention will next be explained in accordance with the accompanying drawings.

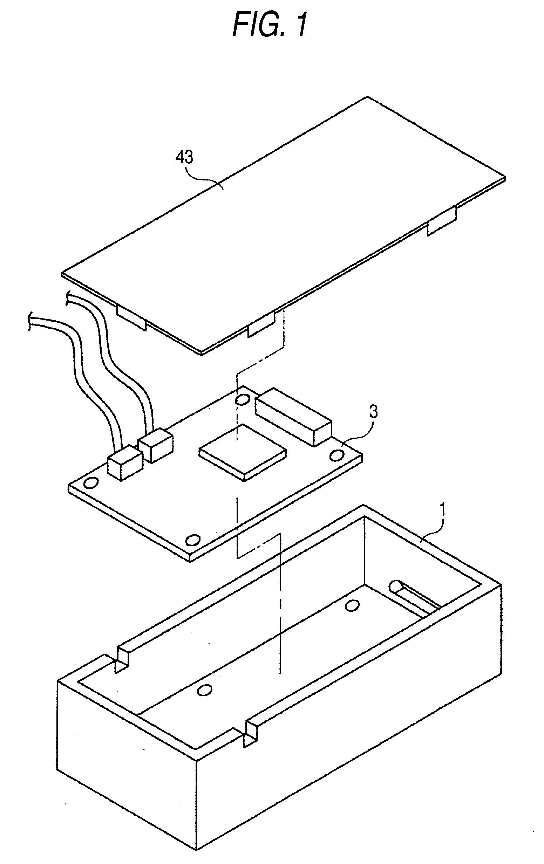

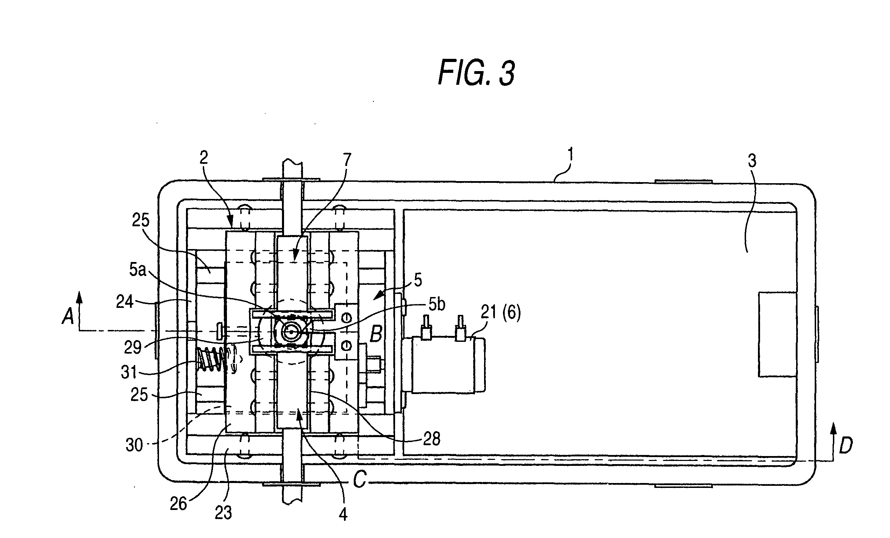

Figs. 1 to 4 show an optical switch unit in accordance with this embodiment mode. In this optical switch unit, a printed board 3 forming an optical switch 2 and a control circuit is stored into a housing 1 manufactured by a metal such as kovar, aluminum, etc.

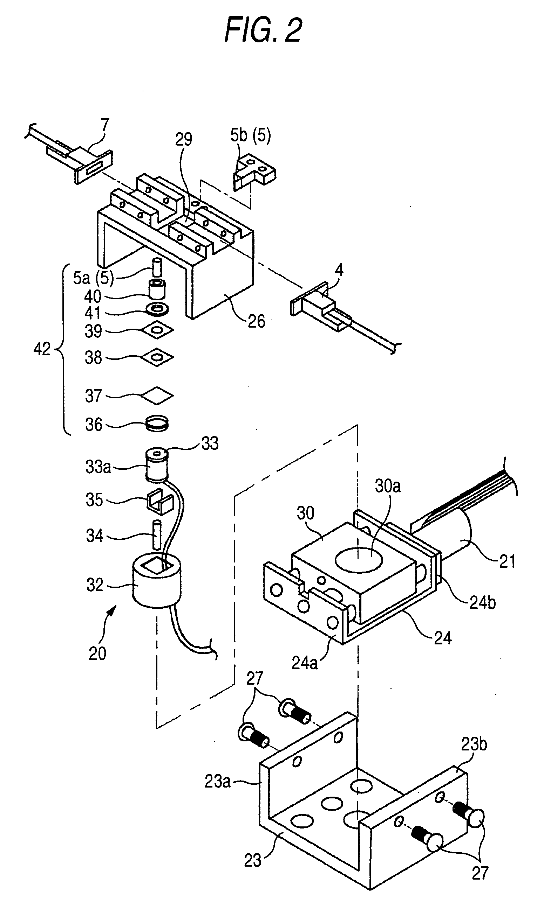

As shown in Fig. 2, the optical switch 2 is constructed by an incident side light transmitting member 4, a reflection member 5, a driving member 6 and an emitting side light transmitting member 7.

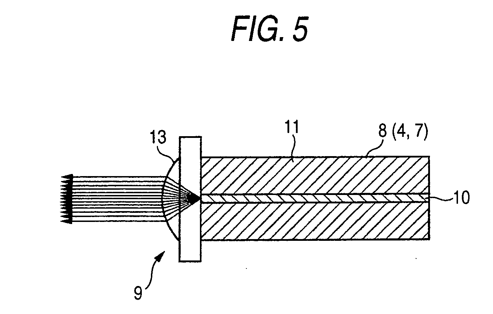

As shown in Fig. 5, the incident side light transmitting member 4 and the emitting side light transmitting member 7 are constructed by an optical fiber array 8 (multi-core optical fiber) and a lens array 9. The optical fiber array 8 is formed in a flat cable shape in which plural incident side optical fibers 4a or emitting side optical fibers 7a are arranged in parallel with each other and are integrated. The optical fiber array 8 is pulled out of one end face of the housing 1. In this embodiment mode, the optical fiber array 8 uses a structure of 125 µm in diameter in which the outer circumferential portion of a core 10 of 9 µm in diameter is covered with a clad 11. Eight incident side light transmitting members 4 are arranged in parallel with each other and are integrated at an interval of 250 µm. Nine emitting side light transmitting members 7 are arranged in parallel with each other and are integrated at the interval of 250 µm. One of the emitting side light transmitting members 7 is a preliminary optical fiber 7b.

In the lens array 9, a collimator lens 13 is formed by transparent resin in a position corresponding to each of the above optical fibers on the surface of a glass substrate 14.

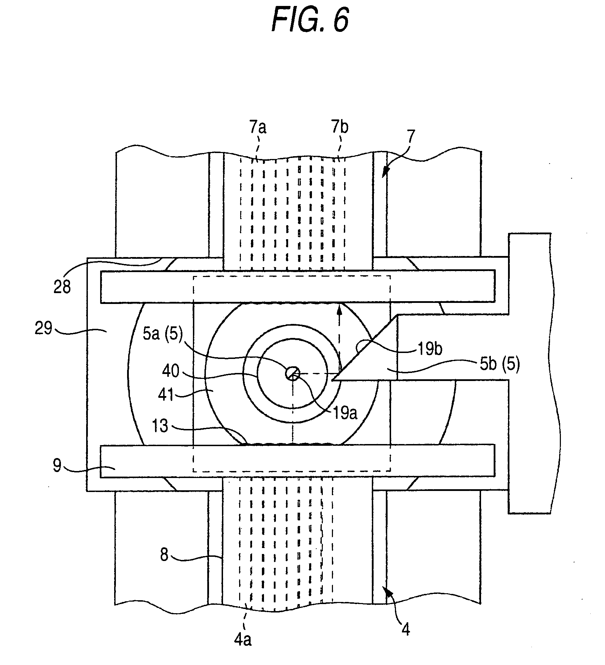

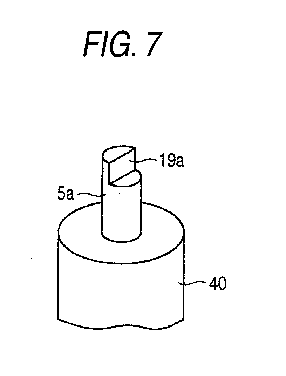

As shown in Fig. 6, the reflection member 5 is constructed by a movable type reflection member 5a and a fixing type reflection member 5b. In the movable type reflection member 5a, as shown in Fig. 7, a reflection face 19a is formed by press working or molding processing at the tip of a wire material constructed by copper, aluminum, stainless steel, or these alloy (brass, etc.), glass and molding resin. An optical signal from the incident side optical fiber 4a is perpendicularly converted directionally and is incident to the emitting side optical fiber 7a by the reflection face 19a. Here, in the movable type reflection member 5a, a wire material of 0.3 mm in diameter is used as shown in Fig. 7, and the press or molding processing is performed on the reflection face 19a until a position passing the center. The reflection face 19a is formed by further evaporating Au in a vacuum. On the other hand, the fixing type reflection member 5b is approximately formed in a triangle prism shape constructed by glass, and Al or Au is evaporated in a vacuum on a reflection face 19b. The optical signal reflected on the movable type reflection member 5a is again reflected and is incident to the preliminary optical fiber 7b of the emitting side light transmitting member 7.

The driving member 6 is constructed by a polarized electromagnet unit 20 and a stepping motor 21. The polarized electromagnet unit 20 has a spool 33 winding a coil 33a therearound. The polarized electromagnet unit 20 positions the reflection face 19a in a reflecting position for locating the reflection face 19a within an optical path, and an escaping position for escaping the reflection face 19a so as not to interrupt the optical signal by raising and lowering the reflection member 5 through each part described later. A screw shaft 22 is connected to the rotating shaft of the stepping motor 21 and the stepping motor 21 is utilized to reciprocate a moving base 30 described later. The above polarized electromagnet unit 20 may be also constructed by a non-polarized electromagnet unit.

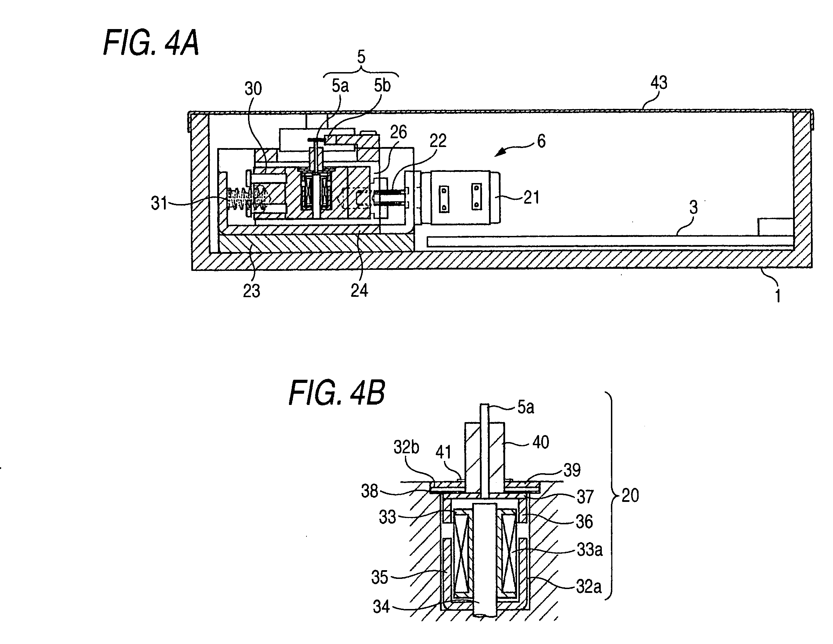

A support structure of the incident side light transmitting member 4, the emitting side light transmitting member 7 and the driving member 6 is constructed as follows. Namely, a base 23 is fixed to one end side within the housing 1. As shown in Fig. 2, opposite walls 23a, 23b are projected from both end edge portions of the base 23. An auxiliary base 24 is fixed to the upper face of the base 23. In the auxiliary base 24, opposite walls 24a, 24b are projected in positions perpendicular to the base 23. A guide pin 25 is projected on the upper face of the auxiliary base 24, and a support base 26 is arranged above the guide pin 25. The position of the support base 26 can be finely adjusted by an adjusting screw 27 arranged in the opposite wall of the base 23. However, when an automatic aligning machine is used, no adjusting screw 27 is required. A groove portion 28 is formed by the opposite wall on the upper face of the support base 26. The incident side light transmitting member 4 and the emitting side light transmitting member 7 are arranged and located on one straight line by this groove portion 28. A guide hole 29 is formed in the upper face central portion of the support base 26. A moving base 30 is placed on the auxiliary base 24 and is biased on the right-hand side within Fig. 4 by a spring 31 arranged in the opposite wall. The moving base 30 can be reciprocated leftward and rightward within Fig. 4 through the screw shaft 22 by driving the stepping motor 21. A holding member 32 is fastened and integrated by a screw in the central portion of the moving base 30. The polarized electromagnet unit 20 is arranged in a storing concave portion 32a of this holding member 32. An iron core 34 is arranged in a central hole of the spool 33 constituting the polarized electromagnet unit 20. This iron core 34 is connected to a yoke 35 arranged in the outer circumference of the coil 33a and approximately formed in a U-shape. A sleeve-shaped (the magnetizing direction is the vertical direction) permanent magnet 36 and an iron piece 37 of a rectangular plate shape are arranged in the upper portion of the polarized electromagnet unit 20. The integrated reflection member 5 is freely raised and lowered in a support portion 40 through a flange spring 38 and a magnetic shielding plate 39. The magnetic shielding plate 39 is positioned in a guide concave portion 32b (Fig. 4B) formed on the upper face of the holding member 32. The movable type reflection member 5a is temporarily fixed to the support portion 40. The movable type reflection member 5a is fixed to the support portion 40 after the reflection face 19a is adjusted to a predetermined desirable angle (here 45 degrees) with respect to the optical signal from the incident side light transmitting member 4.

Driving control of the above driving member 6 and the above polarized electromagnet unit 20 is performed on the basis of a control signal from the control circuit formed in the printed board 3.

An assembly method of the optical switch unit of the above construction will be explained.

First, the incident side light transmitting member 4 and the emitting side light transmitting member 7 are aligned in the support base 26 by using the automatic aligning machine so as to conform these optical axes. The incident side light transmitting member 4 and the emitting side light transmitting member 7 are then temporarily positioned by fastening four portions by screws and are fixed by epoxy resin, etc. However, no screw fastening is required when the automatic aligning machine is used.

Further, after the iron core 34 is inserted into the storing concave portion 32a of the holding member 32 and is positioned, the iron core 34 is fixed by epoxy resin, etc. The yoke 35 and the spool 33 are similarly sequentially inserted and positioned and are then fixed. A movable member 42 is formed by integrating the support portion 40, the flange spring 38, the iron piece 37 and the permanent magnet 36, and is arranged and temporarily fixed to the guide concave portion 32b of the holding member 32. Further, the magnetic shielding plate 39 constructed by a nonmagnetic material is arranged in the guide concave portion 32b and a magnetic ring 41 is fixed to this magnetic shielding plate 39. Here, an electric current is conducted to the polarized electromagnet unit 20 and an operation as to whether or not the permanent magnet 36 can be attracted against the elastic force of the flange spring 38 is confirmed. If this operation can be confirmed, the movable member 42 is fixed to the holding member 32. The movable type reflection member 5a is then attached to the support portion 40 and is adjusted in inclination, etc. and is then fixed.

Subsequently, the holding member 32 attaching the movable type reflection member 5a, etc. thereto is mounted to a guide hole 30a of the moving base 30, and is temporarily fixed by a screw. The auxiliary base 24 is then attached to the base 23 and the moving base 30 is attached to the auxiliary base 24 through the spring 31 and the stepping motor 21 is fixed. At this time, the screw shaft 22 connected to the rotating shaft of the stepping motor 21 is screwed to the moving base 30. A leader line from the stepping motor 21 and the polarized electromagnet unit 20 is connected to a predetermined position of the printed board 3.

Thereafter, the above fixing type reflection member 5b is temporarily fixed to the support base 26, and the support base 26 is temporarily fixed to the base 23. The positions of the incident side light transmitting member 4, the emitting side light transmitting member 7, the movable type reflection member 5a and the fixing type reflection member 5b are then finely adjusted. If the transmitting path of an optical signal can be set to a predetermined desirable position, these members can be fixed by epoxy resin, etc.

Finally, the base 23 and the printed board 3 mounting each of various kinds of electronic parts are fixed into the housing 1 by screws, etc., and are closed by a cover body 43. Thereafter, a fitting face is sealed.

The operation of the optical switch unit of the above construction will be explained.

An optical signal is normally transmitted and received between each incident side optical fiber 4a of the incident side light transmitting member 4 and each emitting side optical fiber 7a of the emitting side light transmitting member 7. If an error is generated in one of the transmitting paths, the control circuit magnetizes the polarized electromagnet unit 20 when a control signal is inputted from the exterior on the basis of this error information. The reflection face 19a of the movable type reflection member 5a is moved downward from a plane forming the transmitting path. The stepping motor 21 is then driven and the movable type reflection member 5a is located below the pertinent transmitting path. Accordingly, no movable type reflection member 5a interrupts the light transmitting passage. Subsequently, the polarized electromagnet unit 20 is reversely magnetized and the reflection face 19a of the movable type reflection member 5a is located in the pertinent light transmitting path by the repulsive force of the permanent magnet 36 and the elastic force of the flange spring 38. Thus, the optical signal from the incident side optical fiber 4a can be incident to the preliminary optical fiber 7b through the reflection faces 19a and 19b of the movable type reflection member 5a and the fixing type reflection member 5b. In this case, the stepping motor 21 and the polarized electromagnet unit 20 are operated only during the movement of the movable type reflection member 5a and no electric power is uselessly consumed. Furthermore, it is sufficient to arrange one reflection member 5 and one driving member 6 so that the construction is simplified and the optical switch unit can be cheaply manufactured.

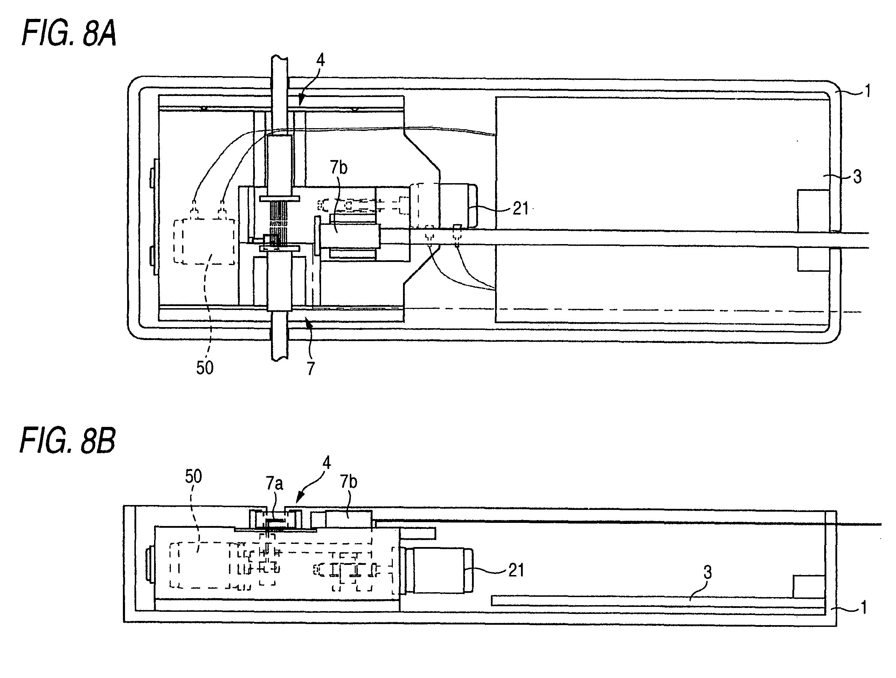

In the above first embodiment mode, the movable type reflection member 5a is raised and lowered by utilizing the polarized electromagnet unit 20, and the fixing type reflection member 5b is arranged and the preliminary optical fiber 7b is integrated with the emitting side light transmitting member 7. However, the optical switch unit may be also constructed as in a second embodiment mode shown in Fig. 8. Namely, in Fig. 8, the movable type reflection member 5a is inserted into the optical path by a rotating movement through a cam 51 integrated with a rotating shaft by driving a motor 50 so that the switching of the optical paths is realized. Further, the preliminary optical fiber 7b may be also constructed so as to be moved together with the movable type reflection member 5a. In accordance with this construction, even when the movable type reflection member 5a is moved to any position, the optical path length to the preliminary optical fiber 7b can be always set to a constant size so that an insertion loss can be preferably restrained.

Further, in the above first and second embodiment modes, the moving base 30 is reciprocated by utilizing the stepping motor 21 and the screw shaft 22, but may be also reciprocated by a voice coil motor.

Further, in the above first and second embodiment modes, the preliminary optical fiber is arranged on the emitting side, but may be also arranged on the incident side and may be further arranged on both the emitting and incident sides. Furthermore, two or more preliminary optical fibers may be also arranged. In this case, it is preferable to be able to select the preliminary optical fiber able to transmit the optical signal by setting the fixing type reflection member 5b to a movable type.

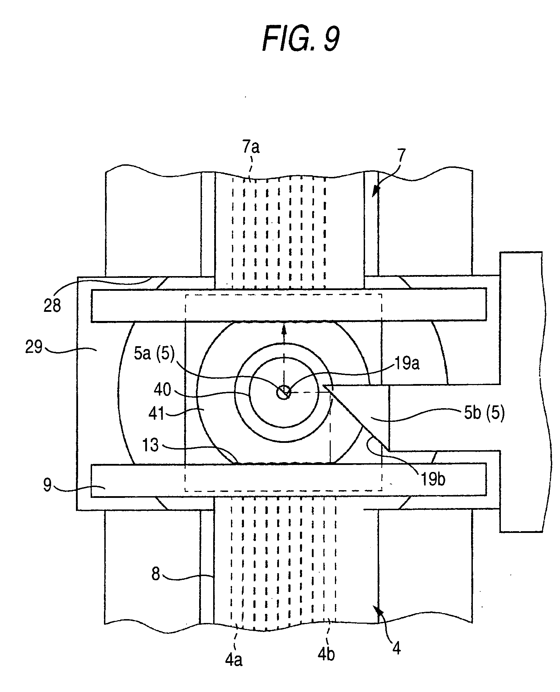

Fig. 9 shows a third embodiment mode in which a preliminary optical fiber 4b is arranged on the incident side. In accordance with the third embodiment mode, when a problem is generated in one of the incident side optical fibers 4a, the optical signal is outputted from the preliminary optical fiber 4b and is directionally converted by the fixing type reflection member 5b. The optical signal can be then incident to the emitting side optical fiber 7a opposed to the incident side optical fiber 4a generating the problem by the movable type reflection member 5a moved similarly to the above embodiment modes.

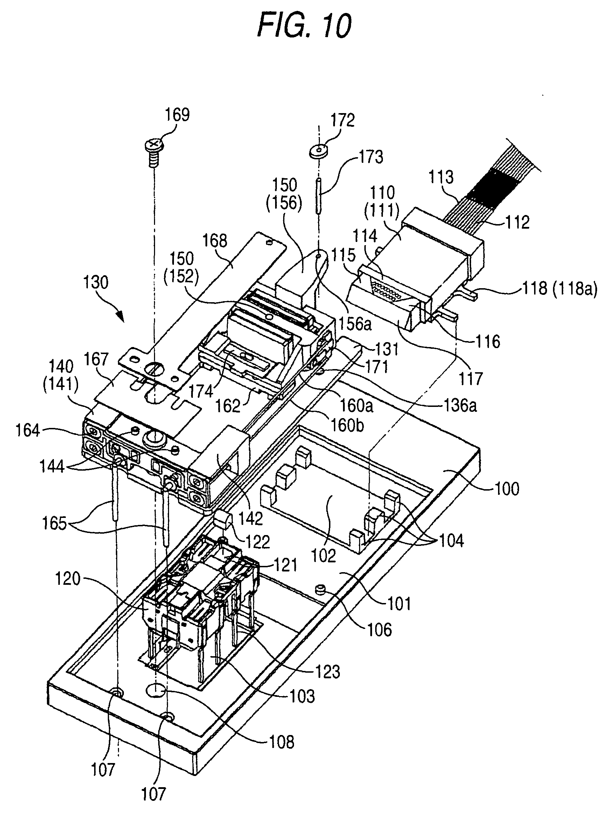

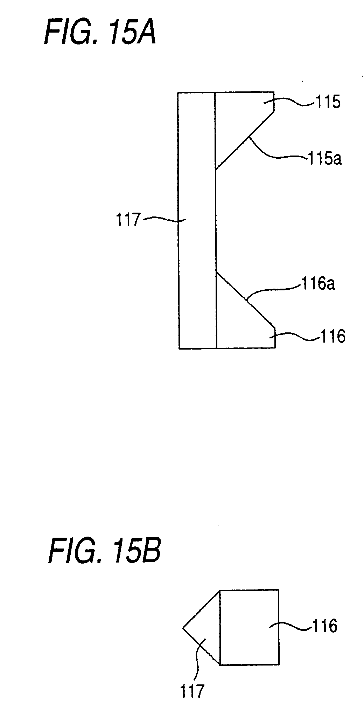

A fourth embodiment mode is a case in which the incident side optical fiber and the emitting side optical fiber are arranged in parallel with each other and are integrated as shown in Figs. 10 to 22. There is an advantage in that a wiring space can be saved.

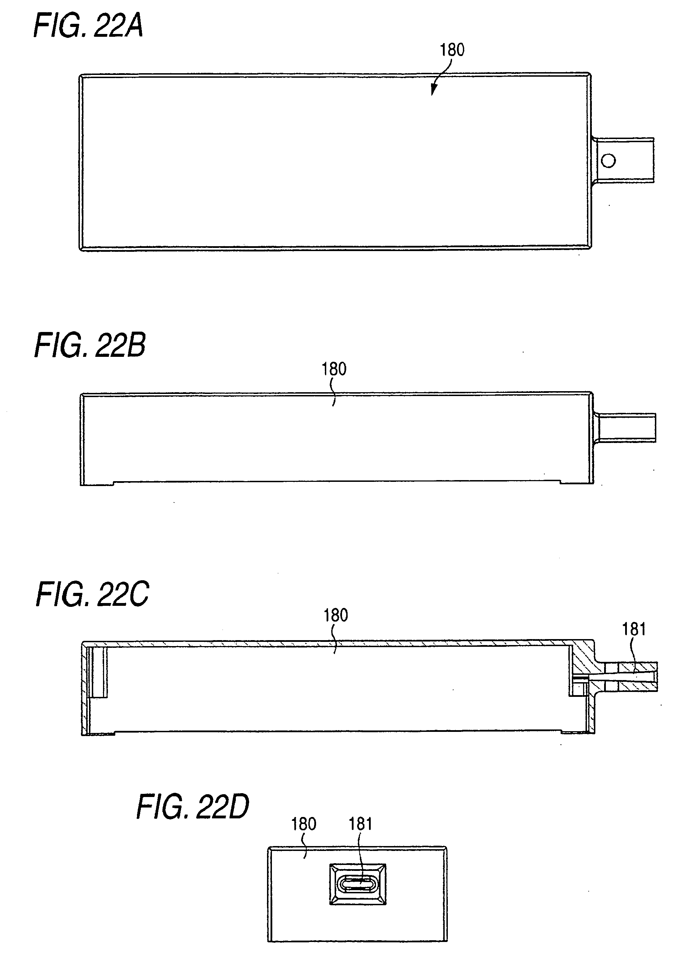

Namely, the optical switch unit in accordance with the fourth embodiment mode is schematically constructed by a base 100, an input-output block 110, a lock release block 120, an optical path switching unit 130 and a case 180 (Fig. 22).

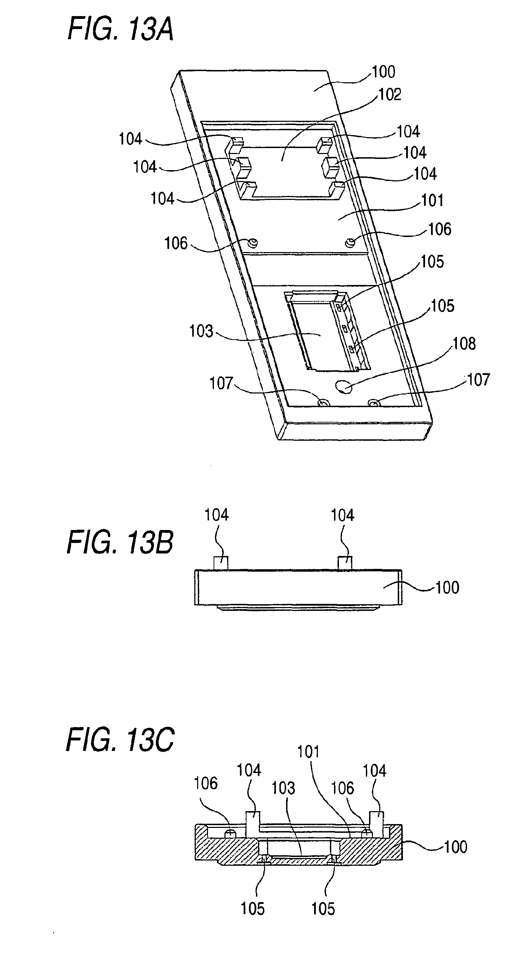

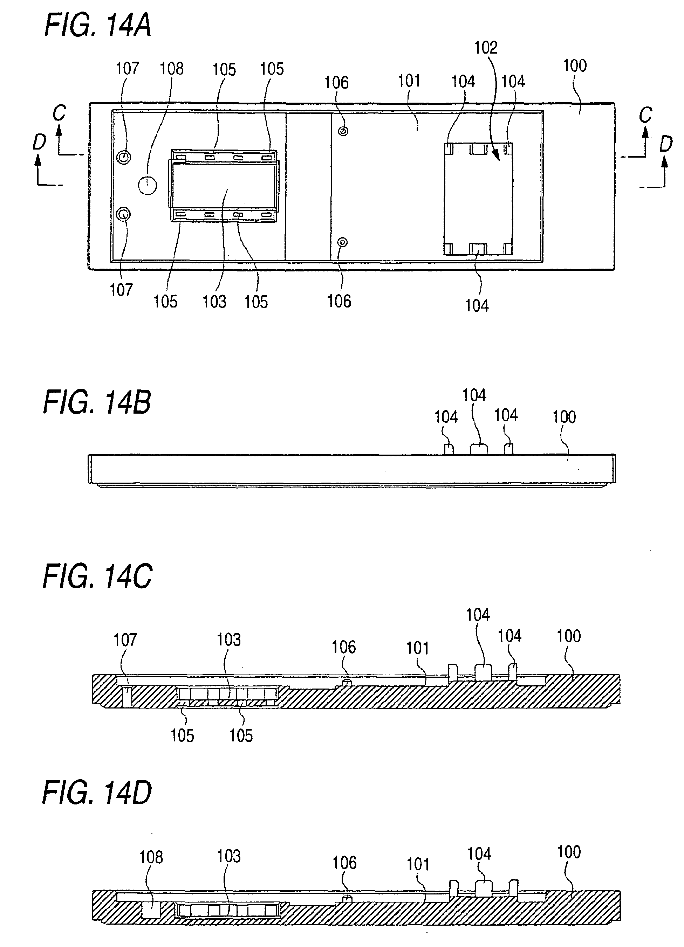

As shown in Figs. 13 and 14, the above base 100 is manufactured by a resin molding product of a plate shape or ceramic. A pedestal portion 102 high by one stage is arranged on one side of the bottom face of a concave portion 101 arranged on the upper face of the base 100. A concave portion 103 low by one stage is formed on the other side. Positioning projections 104 are projected at a predetermined pitch in both side edge portions of the upper face of the above pedestal portion 102. Further, terminal holes 105 for inserting a terminal 123 of an electromagnetic relay 120 described later are arranged at a predetermined pitch in both side corner portions of the bottom face of the above concave portion 103. A pair of positioning projections 106 are projected between the above pedestal portion 102 and the above concave portion 103 on the bottom face of the above base 100. A pair of terminal holes 107, 107 and an escaping hole 108 are arranged between the above concave portion 103 and an opening edge portion.

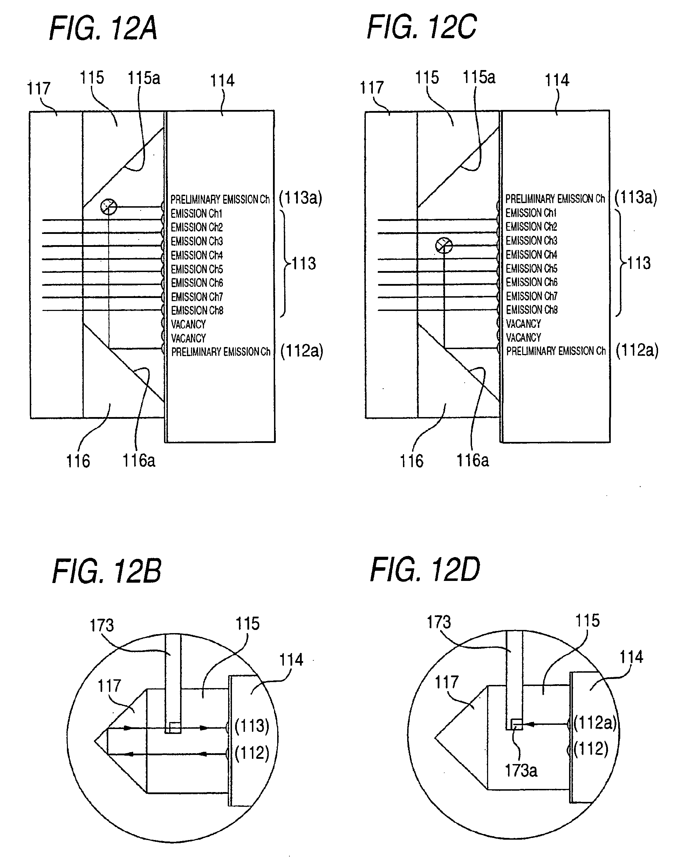

In the input-output block 110, plural incident side optical fibers 112 and emitting side optical fibers 113 arranged in parallel with each other and integrated in a single flat cable shape are inserted as a light transmitting path on one end side of a block main body 111. The above incident side optical fibers 112 and the above emitting side optical fibers 113 are arranged at two stages constructed by the upper and lower stages within the above block main body 111. The above emitting side optical fibers 113 are arranged on the upper stage side so as to respectively correspond to the above incident side optical fibers 112 arranged on the lower stage side. However, as shown in Fig. 12, one preliminary incident side optical fiber 112a among the plural incident side optical fibers 112 is arranged at the same height as the above emitting side optical fiber 113 and is arranged in parallel on the outside in its one direction. Further, one preliminary emitting side fiber 113a among the above plural emitting side optical fibers 113 is arranged on the same plane as the other emitting side optical fibers 113 and are arranged in parallel on the outside in the other direction. Therefore, the preliminary incident side optical fiber 112a and the preliminary emitting side optical fiber 113a are located on the same plane.

Further, in the above input-output block 110, a lens array 114 positioned so as to respectively correspond to the tip faces of the above incident and emitting side optical fibers 112, 113 is joined and integrated on the other end side of the above block main body 111. In this lens array 114, the surface except for the rear face of a glass substrate is covered with transparent resin. In particular, collimator lenses are integrally arranged at a predetermined pitch in positions corresponding to the above optical fibers 112, 113 on the front face of the above lens array 114. A prism 117 is mounted through mirror blocks 115, 116 fixed to both side edge portions of the front face of the above lens array 114. Therefore, the optical signal inputted from the above incident side optical fiber 112 is outputted to the above emitting side optical fiber 113 through the above lens array 114 and the above prism 117. The above mirror blocks 115, 116 have reflection faces 115a, 116a of 45 degrees opposed to each other. Therefore, the preliminary incident side optical fiber 112a and the preliminary emitting side optical fiber 113a form an optical path through the above lens array 114, the mirror blocks 115, 116 and a movable type reflection member 173 described later.

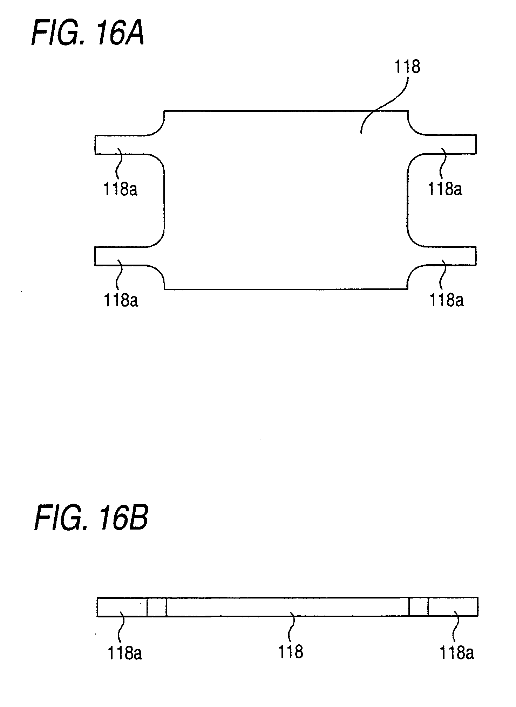

A positioning claw portion 118a (Fig. 16) of an adjusting plate 118 adhered and integrated on the lower face of the above input-output block 110 is engaged with a positioning projection 104 formed in the pedestal portion 102 of the above base 100 and is positioned. Thereafter, the input-output block 110 is adhered and integrated with the pedestal portion 102 of the above base 100.

As shown in Fig. 10, the lock release block 120 is constructed by an existing compact electromagnetic relay in which a movable iron piece 121 is supported so as to make a seesaw movement. A projection 122 attached to one end of the movable iron piece 121 is vertically moved by magnetizing and demagnetizing an electromagnet block built in this lock release block 120. After a terminal 123 of the above lock release block 120 is inserted into an end hole 105 of the concave portion 103 arranged in the above base 100, the lock release block 120 is adhered and fixed.

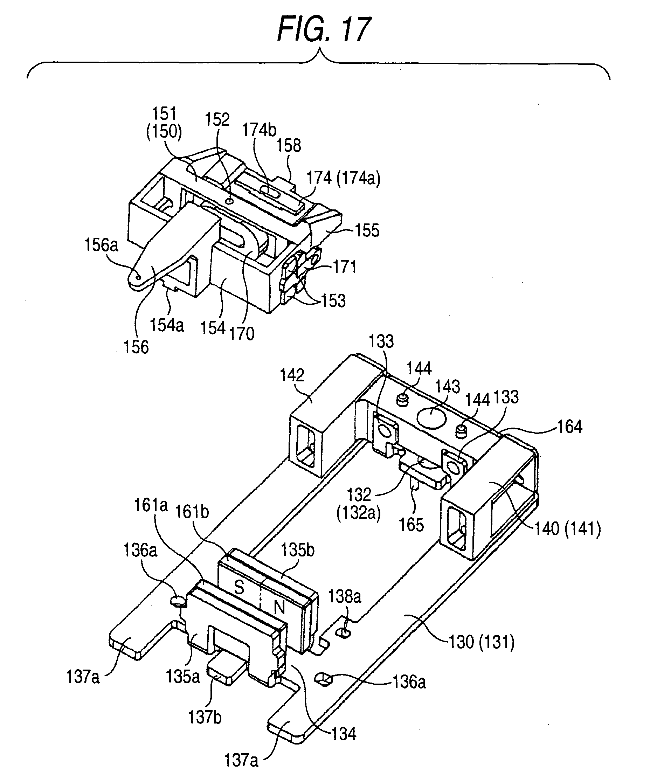

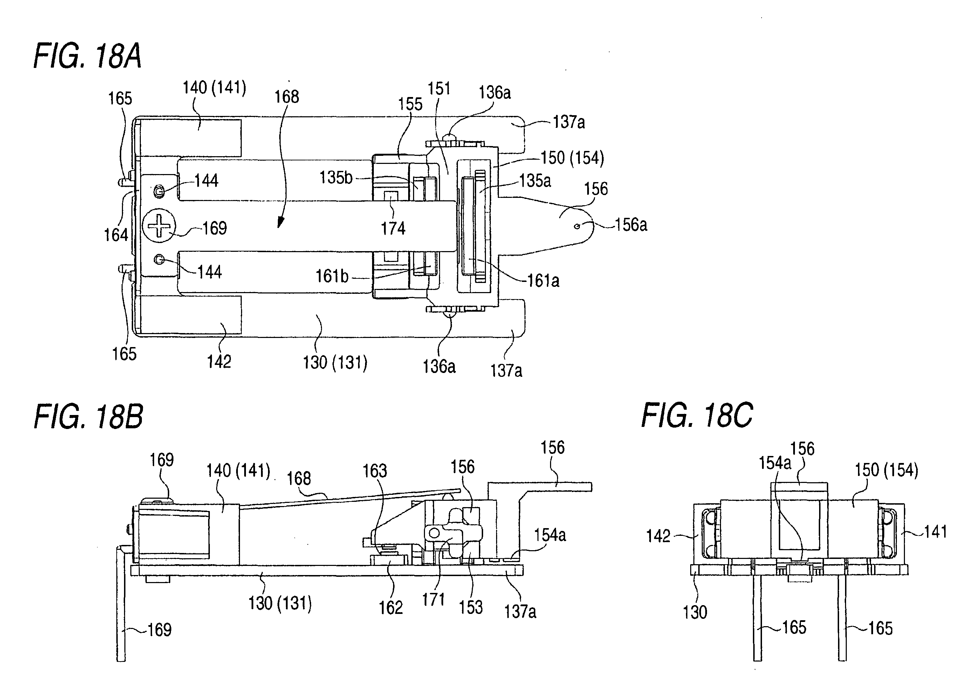

In the optical path switching unit 130, as shown in Figs. 17 and 18, a damper holder 140 mounted onto one side of a support plate 131 and a movable block 150 arranged on its other side are connected and integrated by four support wires in total by arranging a pair of upper and lower support wires 160a, 160b on both the sides. For convenience of the explanation, the support wires 160a, 160b are illustrated only in Fig. 10.

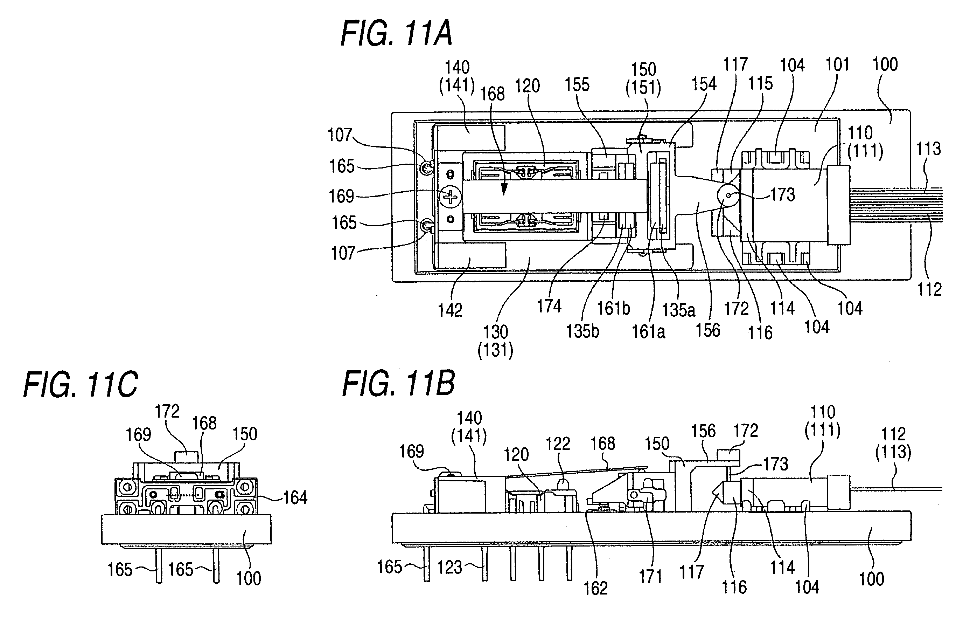

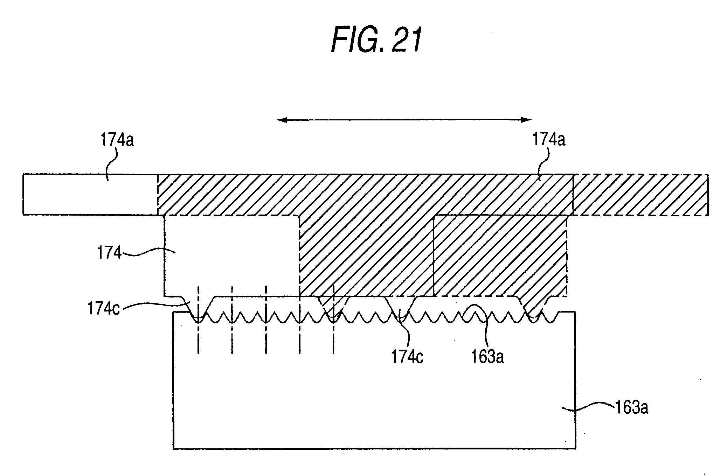

The above support plate 131 is formed by punching a thin iron plate approximately in a rectangular frame shape and a screw hole 132a is formed at the center of a short side 132 on one side of the support plate 131. A pair of tongue pieces 133 for positioning are cut and raised in inside edge portions of the support plate 131. On the other hand, on a short side 134 on the other side of the above support plate 131, opposite walls 135a, 135b as yokes are formed by cutting and raising both side edge portions of this short side 134. Plate-shaped permanent magnets 161a, 161b are respectively joined and integrated on the inside faces of the above opposite walls 135a, 135b. However, the opposite magnetic poles of the above permanent magnets 161a, 161b are different from each other. Further, on the above short side 134, positioning holes 136a, 136a are respectively formed in both end base portions of this short side 134. Three tongue pieces 137a, 137b, 137a for positioning are horizontally extended from the outside edge portion of the short side 134. Therefore, since the movable block 150 described later is always supported by at least two of the above tongue pieces for positioning, it is possible to reliably prevent falling off due to impact, etc. at a transport time. Further, a positioning receiving portion 162 is laid through a screw hole 138a arranged in the vicinity of the inside edge portion of the above short side 134 (Figs. 10 and 11B). A separate V-groove member 163 shown in Fig. 21 is fixed to the upper face of this positioning receiving portion 162 (Fig. 18B). Plural V-grooves 163a are arranged at a predetermined pitch on the upper face of this V-groove member 163. The V-groove 163a is formed such that the inclination angle of this V-groove 163a is 60 degrees. The V-grooves 163a are arranged so as to form a pitch half the parallel arranging pitch of the above optical fiber (Fig. 10).

As shown in Fig. 17, the damper holder 140 is a resin molding product formed approximately in a U-shape in a plane and the side faces of sleeve-shaped arm portions 141, 142 extended in parallel from both end portions of this damper holder 140 are partially opened. In this damper holder 140, a through hole 143 is arranged at the center of the upper face of this damper holder 140. Positioning projections 144, 144 are arranged on both sides of the damper holder 140. Further, as shown in Fig. 10, one end portion of each of the pair of upper and lower support wires 160a, 160b respectively inserted into the above sleeve-shaped arm portions 141, 142 is inserted into a printed board 164 mounted to the side end face of the above damper holder 140 and is supported. Its other end portion is connected to the movable block 150. An intermediate portion of each of the pair of upper and lower support wires 160a, 160b is held by an unillustrated damper agent of a gel shape filled in the tip portion of each of the above sleeve-shaped arm portions 141, 142. Therefore, it is possible to shorten a convergent time until the support wires 160a, 160b are stabilized in predetermined positions after the support wires 160a, 160b are elastically deformed. Further, since the above damper agent is filled only in the tip portions of the above sleeve-shaped arm portions 141, 142, the generation of voids (air bubbles) can be prevented. Further, a pair of terminals 165, 165 directed to the downward side are arranged in the above printed board 164. In the above damper holder 140, a leaf spring 168 is fixed by a screw 169 through a spacer 167 engaged with the above positioning projection 144 and positioned.

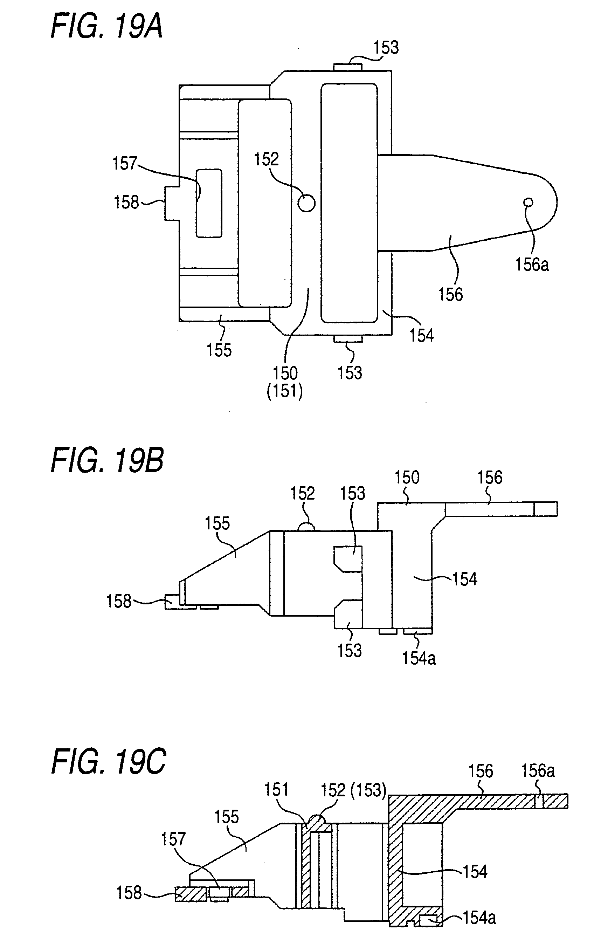

As shown in Figs. 17 and 19, the above movable block 150 has a rectangular holding portion 151 able to store a coil 170 wound at the center of this movable block 150. A pressing projection 152 for preventing one side contact is formed in the central portion of the upper face of the above rectangular holding portion 151. A connecting piece 171 constructed by an electrically conductive metallic material is attached through a pair of engaging projections 153 respectively projected on both left and right side faces of the rectangular holding portion 151. One end of the above support wire 160a is connected to one end portion of the above connecting piece 171 by brazing, etc. A leader line of the above coil 170 is connected to the other end portion of the connecting piece 171. Further, one end of the support wire 160b is fixed to the side face of the above movable block 150. Therefore, the above movable block 150 can be moved in parallel without inclination since both the sides of the movable block 150 are supported by the pair of upper and lower support wires 160a, 160b respectively arranged on these both sides, i.e., the four support wires in total. Further, an electric current can be conducted to the coil 170 through the above support wire 160a and the direction of the electric current able to be conducted can be also changed.

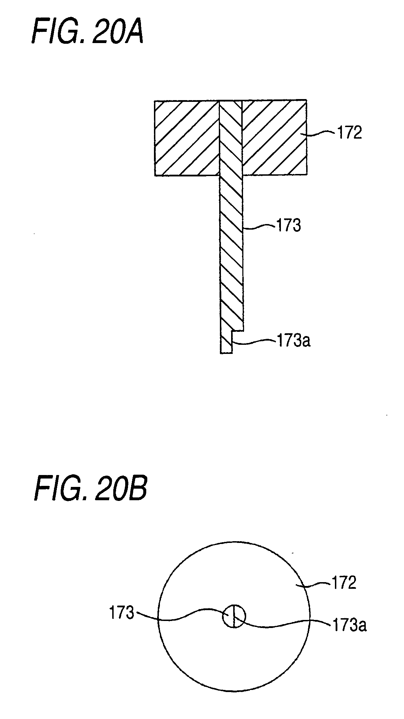

Further, first and second frame portions 154, 155 are respectively formed before and after the above rectangular holding portion 151. An extending portion 156 is horizontally extended from the center of the upper face of the above first frame portion 154. A bar-shaped reflection member 173 (Fig. 20) having an upper portion fixed to a holder 172 is inserted and fixed to an insertion hole 156a arranged at a free end of the above extending portion 156. Therefore, a reflection face 173a of the above bar-shaped reflection member 173 is projected from the lower face of the above extending portion 156. Further, a positioning projection 154a is projected on the lower face of the above first frame portion 154.

On the other hand, in the above second frame portion 155, a position aligning member 174 drops into a fitting hole 157 arranged at the center of the upper face of the second frame portion 155 from above, and its upper flat portion 174a is adhered and fixed to the second frame portion 155. A through hole 174b for making the position aligning member 174 light in weight is arranged at the center of this position aligning member 174. A pair of positioning projection stripes 174c are projected on the lower face of the position aligning member 174 (Fig. 21). The positioning projection stripes 174c are formed such that the distance between the above positioning projection stripes 174c becomes an integer times the pitch of the V-groove 163a arranged in the above V-groove member 163. Accordingly, the position aligning member 174, in its turn, the movable block 150 is positioned by engaging the above positioning projection stripe 174c with the V-groove 163a of the V-groove member 163. A gripping piece 158 extended from the above second frame portion 155 is used in assembling the coil 170 wound around the rectangular holding portion 151, or connecting the support wires 160a, 160b, etc. to the connecting piece 171.

As shown in Fig. 22, the case 180 is constructed by a box body manufactured by resin and able to be fitted to the above base 100 mounting an internal constructional part. An insertion hole 181 for pulling-out plural incident side optical fibers 112 and emitting side optical fibers 113 arranged in parallel and integrated in a single flat cable shape is arranged on one side end face of this case 180.

An assembly method of the optical switch having the above construction will next be explained.

First, the projection 122 is adhered and integrated with one end portion of the movable iron piece 121 of the electromagnetic relay 120 as a lock release block. The terminal 123 is then projected from the terminal hole 105 by placing, adhering and integrating the above electromagnetic relay 120 with the concave portion 103 of the above base 100.

On the other hand, the pair of upper and lower support wires 160a, 160b are respectively inserted into the sleeve-shaped arm portions 141, 142 of the damper holder 140. One end portion of each of the support wires 160a, 160b is inserted into the printed board 164 and is soldered. On the other hand, the above support wires 160a, 160b are held by filling the interior of the sleeve-shaped arm portions 141, 142 with a damper agent. The above damper holder 140 is positioned, adhered and fixed on the short side 132 through the tongue piece 133 for positioning in the support plate 131. The positioning accuracy and the adhesion strength can be raised by the existence of the above tongue pieces 133, 133. Further, the plate-shaped permanent magnets 161a, 161b are arranged on the opposite faces of the opposite walls 135a, 135b of the support plate 131 such that the opposite magnetic poles are different from each other. The positioning receiving portion 152 mounting the V-groove member 153 is laid and fixed through the screw holes 138a, 138a of the above support plate 131.

On the other hand, the coil 170 wound around the rectangular holding portion 151 of the movable block 150 is assembled and its leader line is soldered to one end of the connecting piece 171 attached to each of both side faces of the above movable block 150. Further, the position aligning member 174 is fitted to the fitting hole 157 of the second frame portion 155 from above, and is adhered and integrated. A voice coil motor is formed by respectively fitting the above first and second frame portions 154, 155 to the opposite walls 135a, 135b of the above support plate 131. Further, the tip portion of the support wire 160a is brazed to one end portion of the connecting piece 171 arranged on each of both the side faces of the above movable block 150. The tip portion of the remaining support wire 160b is fixed to the side face of the above movable block 150. Thus, the above movable block 150 is swingably supported by the four support wires 160a, 160b in total. Next, the positioning hole 136a of the support plate 131 of the optical path switching unit 130 in this state is fitted and positioned in the positioning projection 106 arranged in the concave portion 101 of the above base 100. Thereafter, the support plate 131 is adhered and fixed to the above base 100. After the leaf spring 168 is positioned in the above damper holder 140 through the spacer 167, the screw 169 is screwed to the above support plate 131 through the through hole 143, and the above damper holder 140 and the leaf spring 168 are fixed. At this time, the position of the leaf spring 168 with respect to the electromagnetic relay 120 is adjusted by selecting the number of spacers 167.

Namely, when no electromagnetic relay 120 is magnetized, the projection 122 is separated from the leaf spring 168 and the movable block 150 is pushed down by the elastic force of the leaf spring 168. The positioning projection stripe 174c of the position aligning member 174 is engaged with the V-groove 163a of the V-groove member 163 so that the positioning operation can be performed. Further, when the above electromagnetic relay 120 attains a magnetizing state and the movable iron piece 121 is rotated and the projection 122 attached to one end portion of the above movable iron piece 121 pushes up the leaf spring 168, an adjustment is made such that the lock state of the movable block 150 is released and the movable block 150 can be reciprocated along the permanent magnets 161a, 161b.

Thereafter, after the input-output block 110 is positioned, adhered and fixed to the pedestal portion 102 of the base 100 through the adjusting plate 118, the bar-shaped reflection means 173 is inserted into the insertion hole 156a of the extending portion 156 of the above movable block 150 and is adjusted in height. Thereafter, the bar-shaped reflection means 173 is adhered and fixed through the holder 172.

Finally, the above base 100 is covered with-the case 180 in which the incident and emitting side optical fibers 112, 113 are pulled out of the insertion hole 181. Thereafter, the optical switch is completed by hermetically sealing a fitting face, etc.

The operation of the optical switch having the above construction will next be explained.

If no electromagnetic relay 120 is magnetized, no projection 122 attached to the movable iron piece 121 comes in contact with the leaf spring 168. Therefore, the elastic force of the leaf spring 168 pushes down the pressing projection 152 of the movable block 150. At this time, the leaf spring 168 pushes down the gravity center position of the movable block 150. As shown in Fig. 21, the positioning projection stripe 174c of the position aligning member 174 arranged in the movable block 150 is then engaged with the V-groove 163a of the V-groove member 163 laid in the support plate 131. Thus, the reflection face 173a of the bar-shaped reflection means 173 attached to the movable block 150 can be accurately positioned so as to have an angle of 45 degrees with respect to the optical paths of the optical fibers 112, 113. Further, the optical signal can be accurately reflected approximately at the center of the reflection face 173a arranged in the bar-shaped reflection means 173. Further, the positioning projection 154a arranged on the lower face of the first frame portion 154 of the movable block 150 simultaneously comes in press contact with the tongue piece 137b for positioning arranged in the support plate 131. Therefore, the movable block 150 is supported at three points of the positioning projection stripes 174c, 174c and the positioning projection 154a so that the positioning state of the bar-shaped reflection means 173 can be stabilized.

Next, for example, when it is necessary to switch the optical paths as shown in Figs. 12A and 12B, the movable iron piece 121 is rotated by magnetizing the electromagnetic relay 120 and the leaf spring 168 is pushed up by the projection 122. Thus, the pushing-down force of the leaf spring 168 is released and the movable block 150 is floated upward by the elastic force of the support wires 160a, 160b. Therefore, the positioning projection stripe 174c is separated from the V-groove 163a, and the positioning projection 154a is separated from the tongue piece 137b for positioning so that the movable block 150 is freely reciprocated. Accordingly, the bar-shaped reflection means 173 can be moved to a predetermined desirable position without interrupting the optical path.

Therefore, an electric current is conducted to the coil 170 of the voice coil motor and Lorentz force is generated. The Lorentz force in any one of the left direction and the right direction with respect to the movable block 150 can be also generated by changing the electric current conducting direction to the coil 170. Further, the magnitude of the Lorentz force can be also freely changed by changing the magnitude of a voltage applied to the coil 170. Accordingly, the movable block 150 can be moved against the elastic force of the support wires 160a, 160b until a predetermined desirable position by adjusting the electric current conducting direction and the applied voltage to the coil 170.

The electromagnetic relay 120 is demagnetized and the movable iron piece 121 is rotated until an initial state in a state in which the movable block 150 is moved until the predetermined desirable position. Thus, the leaf spring 168 is returned to the original position and pushes down the movable block 150. The positioning projection stripe 174c of the movable block 150 is engaged with the V-groove 163a, and the positioning projection 154a comes in press contact with the tongue piece 137b for positioning. Therefore, the bar-shaped reflection means 173 can be positioned in a predetermined position. After the movable block 150 can be positioned in the predetermined position, the coil 170 of the voice coil motor is demagnetized.

In accordance with the above optical switch, a compact structure of a thin type can be formed by utilizing the existing electromagnetic relay. Further, since the voice coil motor is utilized to move the movable block 150, responsibility is good. Furthermore, there is an advantage in that a predetermined desirable stable optical path can be reliably secured by supporting the movable block 150 at three points.

In the above embodiment modes, the leaf spring 168 is operated and the lock state is released by using the electromagnetic relay 120. However, the lock release means is not limited to the electromagnetic relay, but may also utilize e.g., expansion and contraction of a piezoelectric actuator.

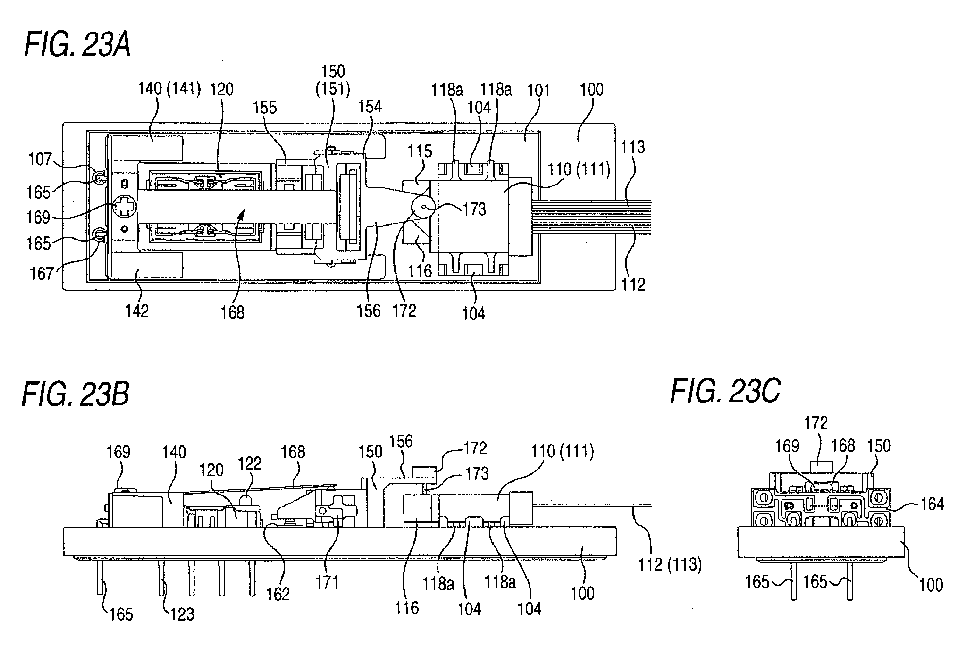

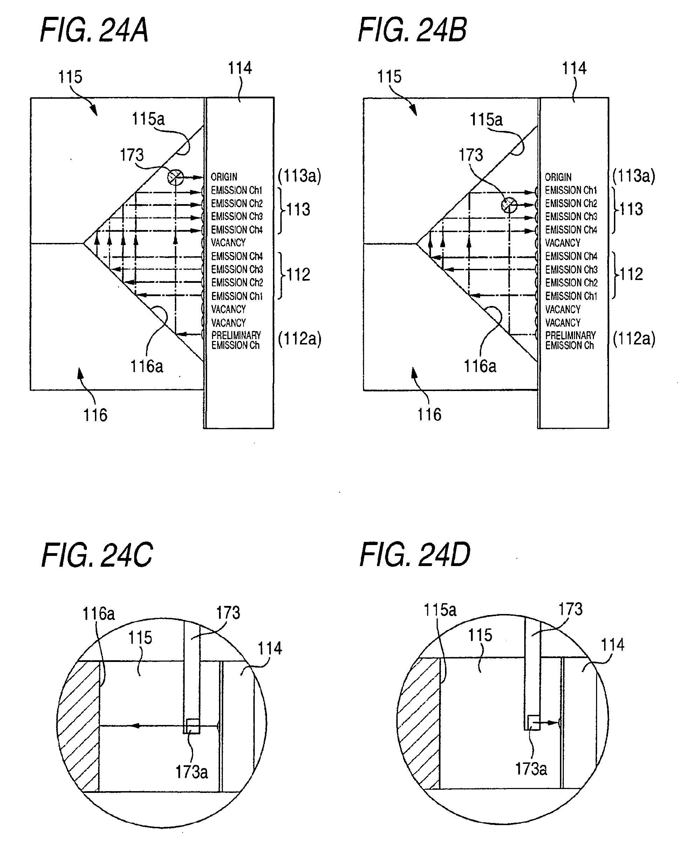

As shown in Figs. 23 and 24, the basic construction of a fifth embodiment mode is approximately similar to that of the above fourth embodiment mode. The difference between the fifth and fourth embodiment modes is the optical path construction of the input-output block. The same parts as the fourth embodiment mode are designated by the same reference numerals and their explanations are omitted.

Namely, plural incident side optical fibers 112 and emitting side optical fibers 113 are arranged in parallel on the same plane, and a preliminary incident side optical fiber 112a is arranged on the same plane outside the incident side optical fiber 112 located on the outermost side. As shown in Fig. 24A, a lens array 114 is arranged so as to correspond to each of the above optical fibers, and a pair of mirror blocks 115, 116 are arranged so as to have reflection faces 115a, 116a inclined 45 degrees with respect to this lens array 114. Therefore, an optical signal outputted from the above incident side optical fiber 112 is transmitted to the emitting side optical fiber 113 through the lens array 114 and the reflection faces 115a, 116a of the mirror blocks 115, 116.

For example, when the optical signal from a second incident side optical fiber 112 is stopped, the bar-shaped reflection member 173 is moved to a predetermined position without interrupting the optical path by an operation similar to that in the above second embodiment mode as shown in Fig. 24B. Therefore, the optical signal outputted from the preliminary incident side optical fiber 112a is inputted to a second emitting side optical fiber 113 through the lens array 114, the mirror block 116 and the reflection face 173a of the bar-shaped reflection means 173.

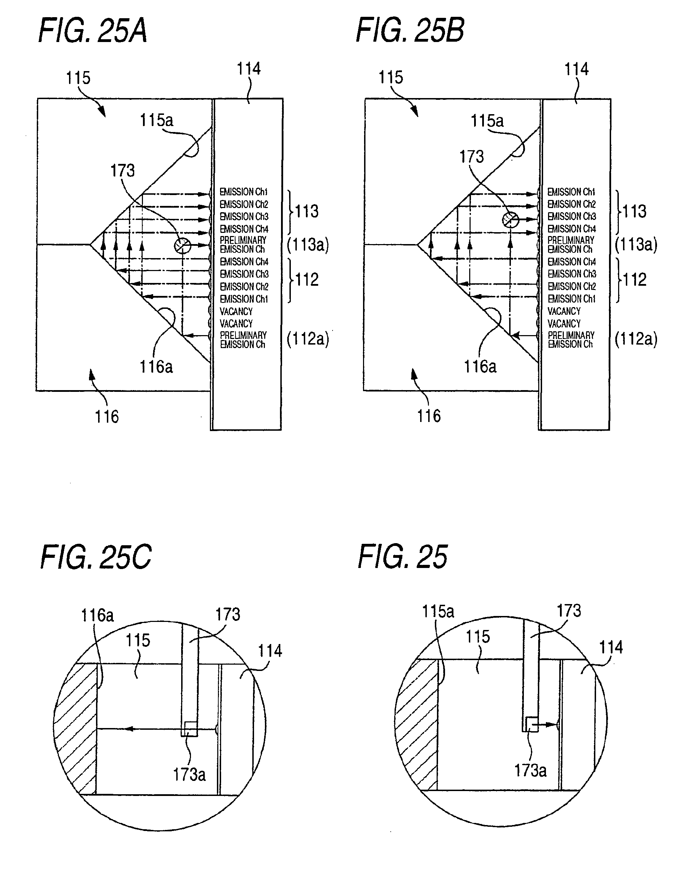

A sixth embodiment mode is approximately similar to the above fifth embodiment mode as shown in Fig. 25. The difference between the sixth and fifth embodiment modes is that a preliminary incident side optical fiber 112a is arranged outside the plural incident side optical fibers 112 arranged in parallel on the same plane, and a preliminary emitting side optical fiber 113a is arranged between the incident side optical fiber 112 and the emitting side optical fiber 113 arranged in parallel. Therefore, the optical signal outputted from the above incident side optical fiber 112 is transmitted to the emitting side optical fiber 113 through the lens array 114 and the mirror blocks 116, 115. Further, the optical signal outputted from the preliminary incident side optical fiber 112a is inputted to the preliminary emitting side optical fiber 113a through the lens array 114, the mirror block 116, and the reflection face 173a of the bar-shaped reflection means 173.

For example, when the optical signal from a third incident side optical fiber 112 is stopped, the bar-shaped reflection member 173 is moved to the predetermined position by an operation similar to that in the above fifth embodiment mode as shown in Fig. 25B. Therefore, the optical signal outputted from the preliminary incident side optical fiber 112a is inputted to a third emitting side optical fiber 113a through the lens array 114, the mirror block 116, and the reflection face 173a of the bar-shaped reflection means 173.

### Industrial Applicability

The present invention can be widely used in the optical communication system.

## Claims

1. An optical switch comprising:
an incident side light transmitting member constructed by plural incident side optical fibers;
an emitting side light transmitting member constructed by plural emitting side optical fibers respectively arranged so as to be opposed to the respective incident side optical fibers;
at least one preliminary optical fiber functioning as one of the incident side optical fiber and the emitting side optical fiber;
reflection means moved so as to be positioned with respect to one of the optical fibers and able to transmit an optical signal between the preliminary optical fiber and the other optical fibers by reflecting the optical signal; and
driving means for moving the reflection means so as to be able to position the reflection means with respect to one of the optical fibers.

2. An optical switch comprising:
plural incident side optical fibers;
plural main emitting side optical fibers respectively arranged so as to be opposed to the respective incident side optical fibers, and a single preliminary emitting side optical fiber;
reflection means for reflecting an optical signal from one of the incident side optical fibers to the preliminary emitting side optical fiber; and
driving means for moving the reflection means with respect to one of the respective incident side optical fibers.

3. An optical switch comprising:
plural main incident side optical fibers and a single preliminary incident side optical fiber;
plural emitting side optical fibers respectively arranged so as to be opposed to the respective main incident side optical fibers;
reflection means for reflecting an optical signal from the preliminary incident side optical fiber to one of the emitting side optical fibers; and
driving means for moving the reflection means with respect to one of the respective emitting side optical fibers.

4. An optical switch comprising:
plural main incident side optical fibers and a single preliminary incident side optical fiber;
plural main emitting side optical fibers respectively arranged so as to be opposed to said respective main incident side optical fibers, and a single preliminary emitting side optical fiber arranged so as to be opposed to said preliminary incident side optical fiber;
reflection means moved so as to be positioned with respect to one of the optical fibers, and able to transmit an optical signal between the preliminary optical fibers and the other optical fibers by reflecting the optical signal; and
driving means for moving the reflection means so as to be able to position the reflection means with respect to one of the optical fibers.

5. An optical switch **characterized in that** an incident side light transmitting member constructed by plural incident side optical fibers, an emitting side light transmitting member constructed by plural emitting side optical fibers, and at least one preliminary optical fiber functioning as one of the incident side optical fiber and the emitting side optical fiber are arranged in parallel and integrated;
an optical signal from each incident side optical fiber is reflected by fixture reflection means and is transmitted to each corresponding emitting side optical fiber; and
the optical signal can be transmitted between the preliminary optical fiber and the other optical fibers by reflecting the optical signal by movable reflection means movable through driving means so as to be positioned with respect to one of the optical fibers.

6. An optical switch **characterized in that** plural incident side optical fibers, plural main emitting side optical fibers and a single preliminary emitting side optical fiber are arranged in parallel and are integrated;
an optical signal from each incident side optical fiber is reflected by fixture reflection means and is transmitted to each corresponding main emitting side optical fiber; and
the optical signal is reflected by movable reflection means movable through driving means so as to be positioned with respect to one of the optical fibers, and can be transmitted between the incident side optical fiber and the preliminary emitting optical fiber.

7. An optical switch **characterized in that** plural main incident side optical fibers, a single preliminary incident side optical fiber and plural emitting side optical fibers are arranged in parallel and are integrated;
an optical signal from each main incident side optical fiber is reflected by fixture reflection means and is transmitted to each corresponding emitting side optical fiber; and
the optical signal is reflected by movable reflection means movable through driving means so as to be positioned with respect to one of the optical fibers, and can be transmitted between the preliminary incident side optical fiber and the emitting side optical fiber.

8. An optical switch **characterized in that** plural main incident side optical fibers, a single preliminary incident side optical fiber, plural main emitting side optical fibers and a single preliminary emitting side optical fiber are arranged in parallel and are integrated,
an optical signal from each main incident side optical fiber is reflected by fixture reflection means and is transmitted to each corresponding main emitting side optical fiber,
the optical signal is reflected by movable reflection means movable through driving means so as to be positioned with respect to one of the optical fibers, and can be transmitted between the preliminary incident side optical fiber and the main emitting side optical fiber, or between the preliminary emitting side optical fiber and the main incident side optical fiber.

9. The optical switch according to any one of claims 1 to 8, wherein said driving means can escape the reflection means until a position for interrupting no optical path between the incident side optical fiber and the emitting side optical fiber in moving the reflection means.

10. The optical switch according to any one of claims 1 to 9, wherein said driving means is constructed by a stepping motor or a voice coil motor.

11. The optical switch according to any one of claims 1 to 10, wherein a lens array for integrating said optical fibers and having a collimator lens for setting light emitted or incident to each optical fiber to parallel light is arranged.

12. The optical switch according to any one of claims 1 to 11, wherein said reflection means and said preliminary emitting side optical fiber can be integrally moved.

13. The optical switch according to any one of claims 1 to 12, wherein said reflection means is constructed by a reflection face formed by press working in one end portion of a bar material manufactured by a metal, press working in one end portion of a bar material manufactured by glass, or injection molding processing.

14. An optical switch unit **characterized in that** the optical switch according to any one of claims 1 to 13 and control means for controlling the operation of said driving means are stored into a single casing.
